(19) Europäisches Patentamt
European Patent Office
Office européen des brevets

(11) **EP 2 894 749 A1**

(12) **EUROPÄISCHE PATENTANMELDUNG**

(43) Veröffentlichungstag:
15.07.2015 Patentblatt 2015/29

(51) Int Cl.:
*H02J 3/00* (2006.01)     *H02J 3/38* (2006.01)

(21) Anmeldenummer: **14197525.0**

(22) Anmeldetag: **12.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.12.2013   DE 102013226761**

(71) Anmelder: **ROBERT BOSCH GMBH**
**70442 Stuttgart (DE)**

(72) Erfinder: **Schmiegel, Armin Uwe**
**22609 Hamburg (DE)**

(54) **Verfahren und Vorrichtung zum Auslegen einer Fotovoltaik-Anlage**

(57) Die Erfindung betrifft ein Verfahren zum Auslegen einer Fotovoltaik-Anlage (230) mit einem Schritt des Einlesens eines Ortsinformationssignals (104) der Fotovoltaik-Anlage (230), eines Anlageninformationssignals (106) sowie eines Haushaltsinformationssignals (108), wobei das Ortsinformationssignal (104) eine Information über eine geografische Positionierung der Fotovoltaik-Anlage (230) repräsentiert, wobei das Anlageninformationssignal (106) eine Information über eine Art und/oder Größe der Fotovoltaik-Anlage (230) repräsentiert und wobei das Haushaltsinformationssignal (108) eine Information über einen Stromverbrauch eines durch die Fotovoltaik-Anlage (230) zu versorgenden Haushalts (238) und/oder über eine Anzahl der in dem Haushalt (238) lebenden Personen (248) und/oder über eine Zimmeranzahl in dem Haushalt (238) repräsentiert, einem Schritt des Ermittelns einer Wetterinformation (112) unter Verwendung des Ortsinformationssignals (104) und/oder einer Sonnenpositionsinformation (114) unter Verwendung des Ortsinformationssignals (104) und eines astronomischen Modells, einem Schritt des Bestimmens eines Fotovoltaik-Ertragsprofils (118) unter Verwendung der Wetterinformation (112), der Sonnenpositionsinformation (114) und/oder des Anlageninformationssignals (106) und Bestimmen eines Verbrauchsprofils (120) des Haushalts (238) sowie einem Schritt des Determinierens eines Netzstromprofils (124) unter Verwendung des Fotovoltaik-Ertragsprofils (118) und des Verbrauchsprofils (120), wobei das Netzstromprofil (124) eine Information über einen Bedarf eine Strommenge aus einem Stromnetz (244) über die Zeit für den Haushalt (238) bestimmt, um die Fotovoltaik-Anlage (230) auszulegen.

**Fig. 2**

**Beschreibung**

Stand der Technik

Die vorliegende Erfindung bezieht sich auf ein Verfahren zum Auslegen einer Fotovoltaik-Anlage, auf eine entsprechende Vorrichtung zum Auslegen einer Fotovoltaik-Anlage sowie auf ein entsprechendes Computerprogrammprodukt.

Bisher besteht die Möglichkeit, einem Nutzer die Funktion eines Fotovoltaik-Speichersystems darzustellen und eine erste Ertragsabschätzung vorzunehmen, darin, dass Lastprofile von vergleichbaren Haushalten mit einer Fotovoltaik-Anlagensimulation kombiniert werden und auf dieser Basis eine Ertragssimulation erstellt wird. Alternativ wird vorgeschlagen, im Haushalt des Anwenders Messungen vorzunehmen, um darauf den Ertrag zu errechnen. In beiden Fallen hat der Anwender keine Möglichkeit einen direkten Bezug zu seinem Alltagsleben zu erhalten, da die Analysen Aggregationen von Jahresverläufen enthalten. Stattdessen muss er Aufwand in Kauf nehmen, da diese Simulationen in der Regel vom Installateur durchgeführt werden, um ein Angebot abzugeben.

Die Patentschrift DE 10 2007 030 492 B4 bezieht sich auf ein Verfahren zur Generierung und Weitergabe von Informationen über Auswirkungen von Sollwert-Änderungen an einer Regeleinrichtung einer Heizeinrichtung auf abhängige, zum Regeln der Heizeinrichtung herangezogene Parameter. Bei Änderung des mindestens einen Sollwert-Parameters wird ein Schätzverfahren, insbesondere ein prädiktives Schätzverfahren, durchgeführt, welches anhand eines Rechenmodells und erfasster Parameter, auch gemessener Istwert-Parameter, zu erwartende Auswirkungen der Änderung des mindestens einen Sollwert-Parameters auf die weiteren abhängigen Sollwert- und/oder Istwert-Parameter per Simulation ermittelt.

Offenbarung der Erfindung

Vor diesem Hintergrund wird mit dem hier vorgestellten Ansatz ein Verfahren zum Auslegen einer Fotovoltaik-Anlage, weiterhin eine Vorrichtung zum Auslegen einer Fotovoltaik-Anlage, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Zur Auslegung einer Fotovoltaik-Anlage kann unter Verwendung einer Ortsinformation der Anlage ein Ertragsprofil und unter Verwendung einer Information über den Haushalt ein Verbrauchsprofil für den erzeugten Strom beziehungsweise für den Stromverbrauch erstellt werden. Unter Berücksichtigung weiterer Parameter wie beispielsweise einer geplanten Anlagengröße kann somit eine Ertragssituation aufgestellt und bewertet werden.

Es wird ein Verfahren vorgestellt zum Auslegen einer Fotovoltaik-Anlage, wobei das Verfahren die folgenden Schritte aufweist:

Einlesen eines Ortsinformationssignals der Fotovoltaik-Anlage, eines Anlageninformationssignals sowie eines Haushaltsinformationssignals, wobei das Ortsinformationssignal eine Information über eine geografische Positionierung der Fotovoltaik-Anlage repräsentiert, wobei das Anlageninformationssignal eine Information über eine Art und/oder Größe der Fotovoltaik-Anlage repräsentiert und wobei das Haushaltsinformationssignal eine Information über einen Stromverbrauch eines durch die Fotovoltaik-Anlage zu versorgenden Haushalts und/oder über eine Anzahl der in dem Haushalt lebenden Personen und/oder über eine Zimmeranzahl in dem Haushalt repräsentiert;

Ermitteln einer Wetterinformation unter Verwendung des Ortsinformationssignals und/oder einer Sonnenpositionsinformation unter Verwendung des Ortsinformationssignals und eines astronomischen Modells, insbesondere wobei die Wetterinformation und die Sonnenpositionsinformation Werte über eine Zeit und/oder ein Zeitintervall repräsentieren;

Bestimmen eines Fotovoltaik-Ertragsprofils unter Verwendung der Wetterinformation, der Sonnenpositionsinformation und/oder des Anlageninformationssignals und Bestimmen eines Verbrauchsprofils des Haushalts;

Determinieren eines Netzstromprofils unter Verwendung des Fotovoltaik-Ertragsprofils und des Verbrauchsprofils, wobei das Netzstromprofil eine Information über einen Bedarf eine Strommenge aus einem Stromnetz über die Zeit für den Haushalt bestimmt, um die Fotovoltaik-Anlage auszulegen.

Bei dem vorgestellten Verfahren kann die Fotovoltaik-Anlage stellvertretend für eine von einem öffentlichen Stromnetz autarke, insbesondere regenerative Energiequelle verstanden werden. Die Fotovoltaik-Anlage ist gekennzeichnet durch über einen Tagesverlauf und über einen Jahresverlauf sich ändernde Produktionsbedingungen. Dabei kann das Ortsinformationssignal eine Adresse oder geografische Koordinaten repräsentieren. Vorteilhaft kann zur Ermittlung der Wetterinformation und zusätzlich oder alternativ der Sonnenpositionsinformation auf Datenbanken mit historischen Daten und ergänzend oder alternativ auf mathematische Modelle zur Erstellung von Prognosen zurückgegriffen werden. Dabei können die Datenbanken auch verteilt sein und auf diese beispielsweise über das Internet zugegriffen werden. Das Fotovoltaik-Ertragsprofils kann eine Leistung der Fotovoltaik-Anlage innerhalb eines Zeitintervalls, beispielsweise über ein Jahr, repräsentieren. Unter dem Verbrauchsprofil kann der Stromverbrauch über die Zeit des Haushalts verstanden werden. Dabei kann auf statistische Daten zurückgegriffen werden. Zur Verbesserung des Ergebnisses, das heißt, um mit dem Verbrauchsprofil, welches ein prognostiziertes Verbrauchsprofil darstellen kann, eine höhere Genauigkeit oder Annäherung an eine Realität zu schaffen, können weitere Benutzereingaben zugelassen sein.

Günstig ist es auch, wenn im Schritt des Einlesens als das Ortsinformationssignal ein Signal eingelesen wird, das ein Signal eines satellitengestützten Positionierungssystems repräsentiert. So kann das Ortsinformationssignal einem GPS-Signal entsprechen oder ansprechend auf ein GPS-Signal bestimmt werden. Anstelle eines GPS-Signals oder zusätzlich kann es sich bei dem Signal eines satellitengestützten Positionierungssystems um ein Galileo-Signal handeln. Anstelle oder zusätzlich eines GPS-Signals oder Galileo-Signals kann es sich bei dem Signal eines satellitengestützten Positionierungssystems um ein GLONASS-Signal handeln. So kann unter Verwendung eines satellitengestützten Positionierungssystems eine genaue Ortsinformation bestimmt werden. Vorteilhaft ist keine Interaktion mit einem Anwender oder Benutzer notwendig.

Im Schritt des Determinierens kann eine Größe eines elektrischen Speichers determiniert werden, um den Bedarf der Strommenge zu reduzieren. So kann das Fotovoltaik-System einen elektrischen Speicher aufweisen, der in Zeiten oder Zeitintervallen von Stromüberschüssen aus dem Fotovoltaik-System Strom speichert, um in Zeiten oder Zeitintervallen großer Nachfrage, die die dann momentane Leistung des Fotovoltaik-Systems übersteigt, den Bedarf zu decken, ohne auf Netzstrom zurückgreifen zu müssen. So kann das Fotovoltaik-System autark oder autarker arbeiten. Dabei kann eine optimale Größe für den elektrischen Speicher bestimmt werden. Dabei können auch Kosten-Nutzen-Überlegungen beziehungsweise -Berechnungen in das Determinieren der Größe des elektrischen Speichers mit einfließen.

Ferner kann im Schritt des Einlesens als Haushaltsinformationssignal ein Signal eingelesen werden, das eine Information über eine Anzahl der in dem Haushalt lebenden Personen, die tagsüber arbeiten, repräsentieren. Die Anzahl der in dem Haushalt lebenden Personen, die tagsüber arbeiten, kann das Verbrauchsprofil beeinflussen. Dies kann aus statistischen Daten abgeleitet werden.

Günstig ist es auch, wenn das Verfahren einen Schritt des Bereitstellens des Netzstromprofils aufweist. Der Schritt des Bereitstellens kann nach dem Schritt des Determinierens ausgeführt werden. So kann im Schritt des Bereitstellens das Netzstromprofil und ergänzend oder alternativ das Verbrauchsprofil und ergänzend oder alternativ das Fotovoltaik-Ertragsprofil bereitgestellt werden.

Ferner kann in einem Schritt des Bereitstellens die Größe des elektrischen Speichers bereitgestellt werden.

Im Schritt des Bereitstellens kann das Netzstromprofil und ergänzend oder alternativ die Größe des elektrischen Speichers auf einer Anzeigeeinrichtung, insbesondere einem Bildschirm, einem Display oder einer optischen Anzeige, für einen Anwender bereitgestellt werden. So kann eine Interaktion mit einem Anwender geschaffen werden.

In einer Ausführungsform kann im Schritt des Einlesens das Anlageninformationssignal und ergänzend oder alternativ das Haushaltsinformationssignal von einer berührungssensitiven Anzeigeeinheit eingelesen werden. Unter der berührungssensitiven Anzeigeeinheit kann insbesondere ein Touch-Display verstanden werden. Diese Form der Anzeige und Eingabe entspricht meistens den Erwartungen eines Anwenders. Die berührungssensitive Anzeige kann Teil eines Smartphones oder Tablet-PCs sein.

Es wird eine Vorrichtung zum Auslegen einer Fotovoltaik-Anlage vorgestellt, wobei die Vorrichtung die folgenden Merkmale aufweist:

eine Schnittstelle zum Einlesen eines Ortsinformationssignals der Fotovoltaik-Anlage, eines Anlageninformationssignals sowie eines Haushaltsinformationssignals, wobei das Ortsinformationssignal eine Information über eine geografische Positionierung der Fotovoltaik-Anlage repräsentiert, wobei das Anlageninformationssignal eine Information über eine Art und/oder Größe der Fotovoltaik-Anlage repräsentiert und wobei das Haushaltsinformationssignal eine Information über einen Stromverbrauch eines durch die Fotovoltaik-Anlage zu versorgenden Haushalts und/oder über eine Anzahl der in dem Haushalt lebenden Personen und/oder über eine Zimmeranzahl in dem Haushalt repräsentiert;

eine Einrichtung zum Ermitteln einer Wetterinformation unter Verwendung des Ortsinformationssignals und/oder einer Sonnenpositionsinformation unter Verwendung des Ortsinformationssignals und eines astronomischen Modells, insbesondere wobei die Wetterinformation und die Sonnenpositionsinformation Werte über eine Zeit und/oder ein Zeitintervall repräsentieren;

eine Einrichtung zum Bestimmen eines Fotovoltaik-Ertragsprofils unter Verwendung der Wetterinformation, der Sonnenpositionsinformation und/oder des Anlageninformationssignals und Bestimmen eines Verbrauchsprofils des Haushalts;

eine Einrichtung zum Determinieren eines Netzstromprofils unter Verwendung des Fotovoltaik-Ertragsprofils und des Verbrauchsprofils, wobei das Netzstromprofil eine Information über einen Bedarf eine Strommenge aus einem Stromnetz über die Zeit für den Haushalt bestimmt, um die Fotovoltaik-Anlage auszulegen.

Der hier vorgestellte Ansatz schafft die Vorrichtung zum Auslegen einer Fotovoltaik-Anlage, die ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuerund/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung der Schritte des Verfahrens nach einer der vorstehend beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:

Fig. 1    ein Blockschaltbild einer Vorrichtung zum Auslegen einer Fotovoltaik-Anlage gemäß einem Ausführungsbeispiel der vorliegenden Erfindung;

Fig. 2    eine schematische Darstellung einer Fotovoltaik-Anlage und einer Vorrichtung zum Auslegen einer Fotovoltaik-Anlage gemäß einem Ausführungsbeispiel der vorliegenden Erfindung;

Fig. 3    ein Ablaufdiagramm eines Verfahrens zum Auslegen einer Fotovoltaik-Anlage gemäß einem Ausführungsbeispiel der vorliegenden Erfindung;

Fig. 4    eine schematische Darstellung einer Funktionsweise einer Fotovoltaik-Anlage am Vormittag gemäß einem Ausführungsbeispiel der vorliegenden Erfindung;

Fig. 5    eine schematische Darstellung einer Funktionsweise einer Fotovoltaik-Anlage am Nachmittag gemäß einem Ausführungsbeispiel der vorliegenden Erfindung;

Fig. 6    eine schematische Darstellung einer Funktionsweise einer Fotovoltaik-Anlage am Abend gemäß einem Ausführungsbeispiel der vorliegenden Erfindung;

Fig. 7    eine schematische Darstellung einer Funktionsweise einer Fotovoltaik-Anlage in der Nacht gemäß einem Ausführungsbeispiel der vorliegenden Erfindung;

Fig. 8    eine vereinfachte Zeitreihendarstellung zur Darstellung einer Funktionsweise eines Speichersystems gemäß einem Ausführungsbeispiel der vorliegenden Erfindung;

Fig. 9    eine grafische Darstellung eines aktuellen Betriebszustands gemäß einem Ausführungsbeispiel der vorliegenden Erfindung; und

Fig. 10   eine grafische Darstellung aktueller Energieflüsse gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

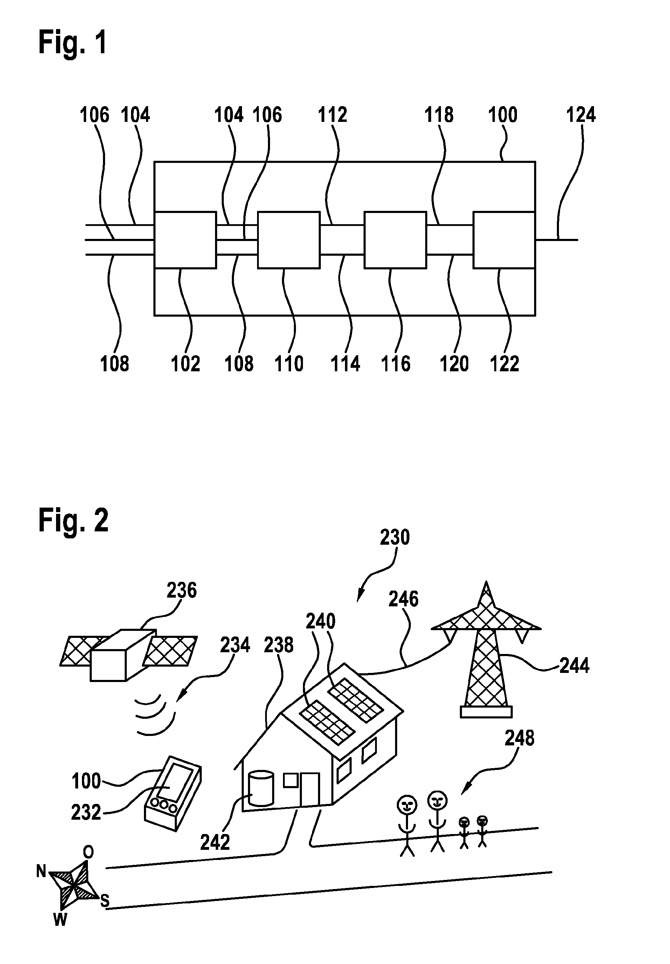

Fig. 1 zeigt ein Blockschaltbild einer Vorrichtung 100 zum Auslegen einer Fotovoltaik-Anlage gemäß einem Ausführungsbeispiel der vorliegenden Erfindung. Die Vorrichtung 100 weist eine Schnittstelle 102 zum Einlesen eines Ortsinformationssignals 104 der Fotovoltaik-Anlage, eines Anlageninformationssignals 106 sowie eines Haushaltsinformationssignals 108 auf. Dabei repräsentiert das Ortsinformationssignal 104 eine Information über eine geografische Positionierung der Fotovoltaik-Anlage. Das Anlageninformationssignal 106 repräsentiert eine Information über eine Art und ergänzend oder alternativ Größe der Fotovoltaik-Anlage. Das Haushaltsinformationssignal 108 repräsentiert eine Information über einen Stromverbrauch eines durch die Fotovoltaik-Anlage zu versorgenden Haushalts und ergänzend oder alternativ über eine Anzahl der in dem Haushalt lebenden Personen und ergänzend oder alternativ über eine Zimmeranzahl in dem Haushalt. Weiterhin umfasst die Vorrichtung 100 eine Einrichtung 110 zum Ermitteln einer Wetterinformation 112 sowie einer Sonnenpositionsinformation 114. Dabei wird die Wetterinformation 112 unter Verwendung des Ortsinformationssignals 104 ermittelt. Die Sonnenpositionsinformation 114 wird unter Verwendung des Ortsinformationssignals 104 und eines astronomischen Modells ermittelt. Dabei repräsentieren die Wetterinformation 112 und die Sonnenpositionsinformation 114 Werte über eine Zeit und ergänzend oder alternativ ein Zeitintervall. Weiterhin weist die Vorrichtung eine Einrichtung 116 zum Bestimmen eines Fotovoltaik-Ertragsprofils 118 und eines Verbrauchsprofils 120 des Haushalts auf. Dabei wird das Fotovoltaik-Ertragsprofil 118 unter Verwendung der Wetterinformation 112, der Sonnenpositionsinformation 114 und des Anlageninformationssignals bestimmt. Das Verbrauchsprofil 120 wird unter Verwendung des Haushaltsinformationssignals bestimmt. In einer Einrichtung 122 zum Determinieren wird ein Netzstromprofil 124 unter Verwendung des Fotovoltaik-Ertragsprofils 118 und des Verbrauchsprofils 120 determiniert. Dabei zeigt das Netzstromprofil 124 eine Information über einen Bedarf einer Strommenge aus einem Stromnetz über die Zeit für den Haushalt, sodass die Fotovoltaik-Anlage auslegbar ist, das heißt, Größe und Art der Fotovoltaik-Anlage lassen sich derart optimieren beziehungsweise wählen.

Fig. 2 zeigt eine schematische Darstellung einer Fotovoltaik-Anlage 230 und einer Vorrichtung 100 zum Auslegen der Fotovoltaik-Anlage 230 gemäß einem Ausführungsbeispiel der vorliegenden Erfindung. Bei der Vorrichtung 100 zum Auslegen der Fotovoltaik-Anlage 230 kann es sich um ein Ausführungsbeispiel der in Fig. 1 gezeigten und beschriebenen Vorrichtung 100 zum Auslegen der Fotovoltaik-Anlage 230 handeln. In dem Ausführungsbeispiel ist die Vorrichtung 100 als eine mobile Vorrichtung 100 mit einer Anzeigeeinrichtung 232 in Form einer berührungssensitiven Anzeige, insbesondere als ein Touch-Display ausgeführt. Die Vorrichtung 100 ist ausgebildet, ein Signal 234 eines satellitengestützten Positionierungssystems 236 als ein Ortsinformationssignal zu empfangen. Je nach Variante handelt es sich bei dem satellitengestützten Positionierungssystems 236 um Signale 234 eines zu dem Global Positioning System beziehungsweise GPS und ergänzend oder alternativ zu GLONASS oder/oder Galileo gehörendem Satelliten. Die Fotovoltaik-Anlage 230 ist an oder auf einem Haus 238 installiert. Das Haus 238 ist hier als Repräsentant für einen Haushalt 238 dargestellt. Dabei sind zwei Solarmodule 240 auf einem Dach des Hauses 238 installiert. Weiterhin umfasst das Fotovoltaik-System 230 einen elektrischen Speicher 242. Das Haus 238 ist über eine Leitung mit dem öffentlichen Stromnetz 244 verbunden, um Netzstrom 246 zu beziehen oder um überschüssige elektrische Energie in das Stromnetz einzuspeisen. Drei Figuren vor dem Haus symbolisieren die in dem Haus 238 oder Haushalt 238 lebenden Personen 248.

Ein Aspekt der vorliegenden Erfindung ist die Vorstellung eines Konzepts zur vereinfachten Simulation und Darstellung der Funktion eines Fotovoltaik-Speichersystems.

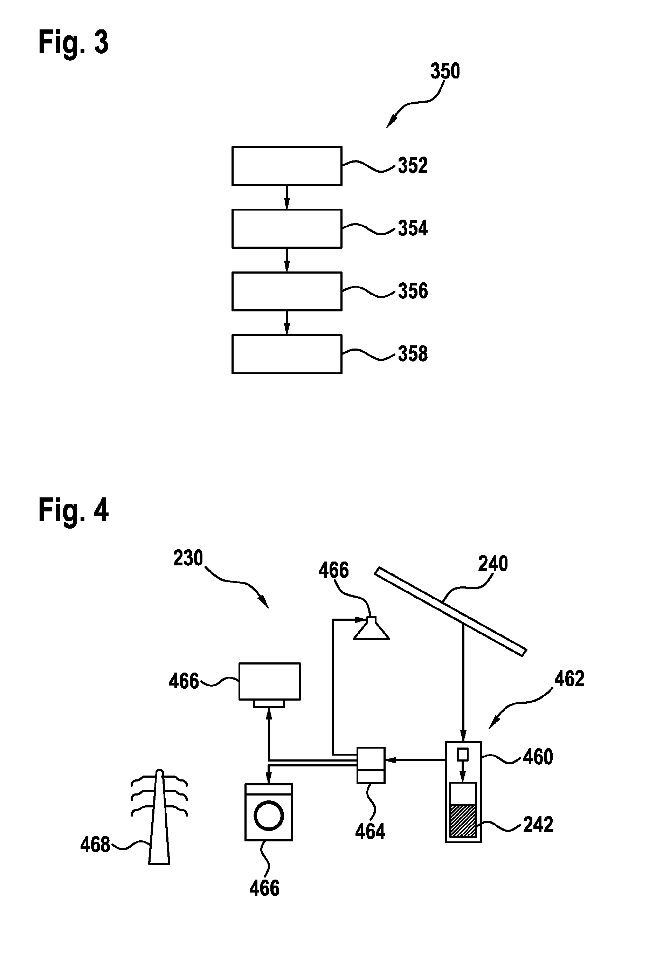

In einem Ausführungsbeispiel wird ein die erfindungsgemäße Idee umsetzendes Verfahren, wie dies auch in Fig. 3 beschrieben ist, auf einer mobilen Plattform, einem Smartphone oder Tablet-PC installiert und ausgeführt. Es erlaubt dem Nutzer einen Eindruck zu vermitteln, wie ein Fotovoltaik-Speichersystem in seinem Alltag arbeitet. Ein Aspekt der vorliegenden Idee ist es, dabei ohne ein Messprogramm und umfangreiche Konfiguration durch den Anwender oder Benutzer oder Anwender auszukommen. Der Anwender erhält so auf einfachem Weg eine erste, grobe Abschätzung über die finanzielle Sinnhaftigkeit der Investition. Das alles ist mit sehr geringem Aufwand verbunden. Der Anwender muss nicht mit einem Installateur in Kontakt treten, sondern kann sich selber mit der Thematik auseinandersetzen. Der Anwender kann selber die Genauigkeit der Daten erhöhen, so er es denn will.

Ein Aspekt dabei ist, dass der Anwender wenige Angaben über sein Verbrauchsverhalten machen. Der Strombedarf wird ohne Messungen geschätzt und kann im weiteren Verlauf verbessert werden. Der Anwender kann ohne große Konfiguration innerhalb weniger Sekunden die Simulation so konfigurieren, dass er danach in Echtzeit sehen kann, wie in seinem Haushalt ein Fotovoltaik-Speichersystem arbeiten würde. Gleichzeitig kann ein Anwender einen unmittelbaren Vergleich ziehen, wie eine reine Fotovoltaik-Anlage oder der Verzicht auf die Investition seine Stromkosten beeinflussen.

Fig. 3 zeigt ein Ablaufdiagramm eines Verfahrens 350 zum Auslegen einer Fotovoltaik-Anlage gemäß einem Ausführungsbeispiel der vorliegenden Erfindung. Bei der Fotovoltaik-Anklage kann es sich um ein Ausführungsbeispiel einer in Fig. 2 beschriebenen Fotovoltaik-Anlage 230 handeln. Das Verfahren 350 zum Auslegen einer Fotovoltaik-Anlage umfasst einen Schritt 352 des Einlesens eines Ortsinformationssignals der Fotovoltaik-Anlage, eines Anlageninformationssignals sowie eines Haushaltsinformationssignals, einen Schritt 354 des Ermittelns einer Wetterinformation unter Verwendung des Ortsinformationssignals sowie einer Sonnenpositionsinformation unter Verwendung des Ortsinformationssignals und eines astronomischen Modells, einen Schritt 356 des Bestimmens eines Fotovoltaik-Ertragsprofils und eines Verbrauchsprofils des Haushalts sowie einen Schritt 358 des Determinierens eines Netzstromprofils unter Verwendung des Fotovoltaik-Ertragsprofils und des Verbrauchsprofils.

Dabei repräsentiert das Ortsinformationssignal eine Information über eine geografische Positionierung der Fotovoltaik-Anlage, das Anlageninformationssignal eine Information über eine Art und ergänzend oder alternativ Größe der Fotovoltaik-Anlage und das Haushaltsinformationssignal eine Information über einen Stromverbrauch eines durch die Fotovoltaik-Anlage zu versorgenden Haushalts und ergänzend oder alternativ über eine Anzahl der in dem Haushalt lebenden Personen und ergänzend oder alternativ eine Anzahl der in dem Haushalt lebenden Personen, die tagsüber arbeiten, und ergänzend oder alternativ über eine Zimmeranzahl in dem Haushalt. Die Wetterinformation und die Sonnenpositionsinformation repräsentieren Werte über eine Zeit und ergänzend oder alternativ ein Zeitintervall. Es handelt sich somit über ein Profil über die Zeit in einem bestimmten Zeitabschnitt. Das Fotovoltaik-Ertragsprofils wird unter Verwendung der Wetterinformation, der Sonnenpositionsinformation und des Anlageninformationssignals bestimmt. Das Netzstromprofil stellt eine Information über einen Bedarf eine Strommenge aus einem Stromnetz über die Zeit für den Haushalt dar. Das Netzstromprofil dient dazu, die Fotovoltaik-Anlage auszulegen.

Im Schritt des Einlesens repräsentiert das Ortsinformationssignal in einem Ausführungsbeispiel ein Signal eines satellitengestützten Positionierungssystems. Je nach Variante des satellitengestützten Positionierungssystems handelt es sich dabei um ein GPS-Signal, ein Galileo-Signal und/oder um ein GLONASS-Signal.

In einem günstigen Ausführungsbeispiel wird im Schritt des Determinierens auch eine Größe oder Speicherkapazität des elektrischen Speichers bestimmt. Hierzu kann vorgegeben werden, wie viel Netzstrom maximal bezogen werden soll oder wie hoch Spannungsspitzen bei dem Bezug des Netzstroms ausfallen können. Vorteilhaft wird durch einen korrekt ausgelegten elektrischen Speicher der Bedarf der Strommenge aus dem öffentlichen Stromnetz zu reduziert.

In einer Variante des in Fig. 3 gezeigten Verfahren 350 zum Auslegen einer Fotovoltaik-Anlage weist das Verfahren 350 einen hier nicht dargestellten optionalen Schritt des Bereitstellens des Netzstromprofils auf. Optional stellt der Schritt des Bereitstellens ergänzend oder alternativ eine Information über die Größe des elektrischen Speichers bereit.

Entsprechend der in Fig. 2 dargestellten Vorrichtung zum Auslegen einer Fotovoltaik-Anlage wird in einer Variante des beschriebenen Verfahrens 350 das Netzstromprofil und ergänzend oder alternativ die Größe des elektrischen Speichers auf einer Anzeigeeinrichtung für einen Anwender bereitgestellt. Beispielsweise handelt es sich bei der Anzeigeeinrichtung um ein Smartphone.

Optional wird im Schritt des Einlesens das Anlageninformationssignal, das Haushaltsinformationssignal oder das Ortsinformationssignal über eine berührungssensitive Anzeige, insbesondere ein Touch-Display, eingelesen. Das Ortsinformationssignal kann auch über andere technische Mittel zur Positionsbestimmung bereitgestellt und davon eingelesen werden. Auch eine Positionsbestimmung über Mobilfunkmasten ist in einem Ausführungsbeispiel ausreichend.

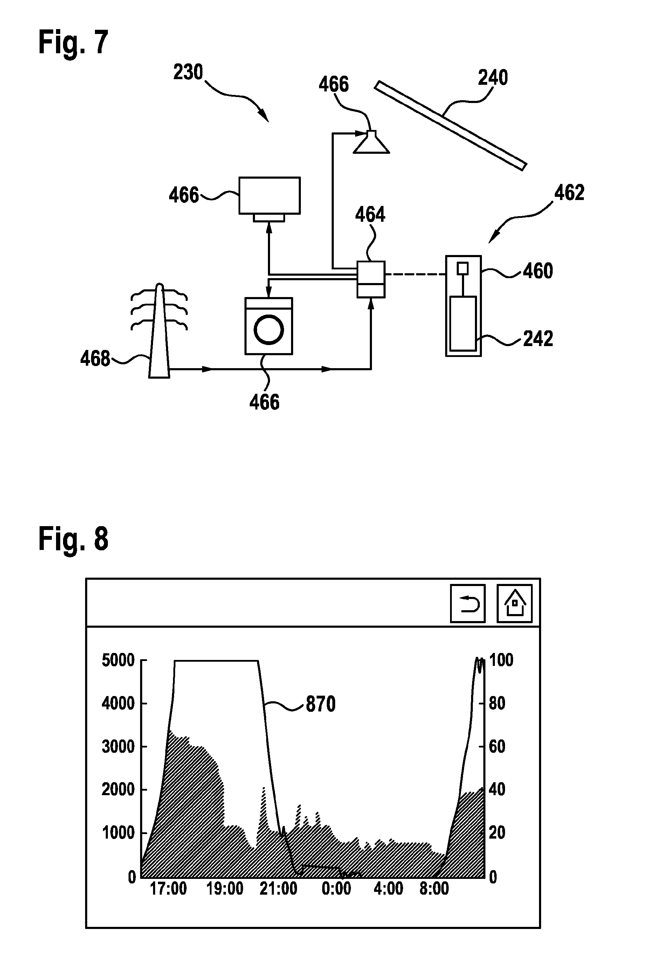

Die grundsätzliche Funktion eines Fotovoltaik-Speichersystems ist in den folgenden Figuren Fig. 4 bis Fig. Fig. 7 dargestellt. Ein Fotovoltaik-Speichersystem (hier eine DC-Topologie) versorgt zunächst die Verbraucher in einem Haushalt. Sobald ein Überschuss an PV-Leistung (Fotovoltaik-Leistung oder Solarleistung) vorhanden ist, werden die Überschüsse in die Batterie beziehungsweise den elektrischen Speicher geladen. Ist die Batterie gefüllt, wird die restliche Leistung ins Netz eingespeist. In dem Moment, wo der Hausverbrauch größer als die PV-Produktion (Fotovoltaik-Produktion oder Solarproduktion) ist, wird die Batterie entladen. In der Nacht, wenn auch die Batterie komplett entladen ist, wird vom Netz Strom bezogen. Auf diese Weise kann der erzeugte Solarstrom optimiert und selbst verbraucht werden. Der Anwender reduziert somit seine Stromkosten und hat noch den zusätzlichen Ertrag durch den Verkauf von Solarstromüberschüssen.

Die Figuren Fig. 4 bis Fig. 7 zeigen eine Darstellung der grundlegenden Funktionsweise eines Fotovoltaik-Speichersystems. Dieser sehr einfachen Darstellung steht die Komplexität der Verbraucher im Haushalt und der Erzeugung von Fotovoltaik-Strom entgegen.

Fig. 4 zeigt eine schematische Darstellung einer Funktionsweise einer Fotovoltaik-Anlage 230 am Vormittag gemäß einem Ausführungsbeispiel der vorliegenden Erfindung. Bei der Fotovoltaik-Anlage 230 kann es sich um ein Ausführungsbeispiel der in Fig 2 beschriebenen Fotovoltaik-Anlage 230 handeln. Die Fotovoltaik-Anlage 230 umfasst ein Solarmodul 240, einen elektrischen Speicher 242 sowie einen Wechselrichter 460. Der elektrische Speicher 242 und der Wechselrichter 460 sind in einem Speichersystem 462 zusammengefasst. Das Speichersystem 462 ist mit einer Koppelungseinrichtung 464 verbunden. Über die Kopplungseinrichtung 464 sind eine Mehrzahl von elektrischen Verbrauchern 466 wie beispielsweise Lampen, Unterhaltungselektronik oder weiße Ware wie Waschmaschine, Herd oder Spülmaschine, mit dem Stromnetz verbunden. Ein Strommast symbolisiert ein öffentliches Stromnetz 468.

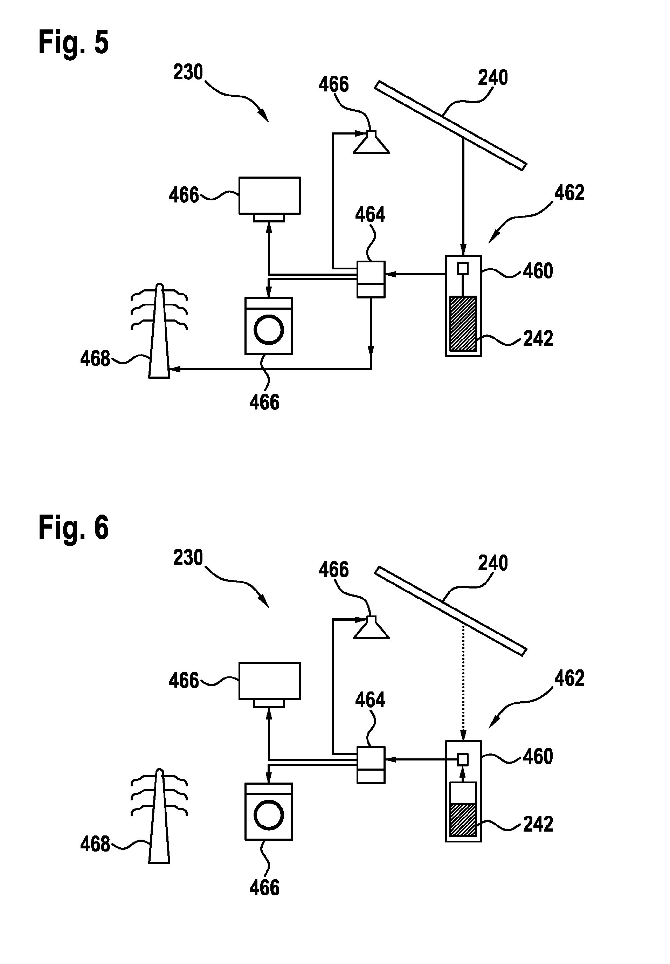

Die in Fig. 4 dargestellten Stromflüsse stellen eine Situation an einem Vormittag dar. Der elektrische Speicher 242 ist zur Hälfte gefüllt. Die Solarmodule 240 liefern ausreichend Energie, um den elektrischen Speicher 242 sowie die elektrischen Verbraucher 466 mit Strom zu versorgen. Im Laufe des Vormittags wird der elektrische Speicher weiter aufgefüllt, wie sich auch aus der folgenden Fig. 5 ergibt.

Fig. 5 zeigt eine schematische Darstellung einer Funktionsweise einer Fotovoltaik-Anlage 230 am Nachmittag gemäß einem Ausführungsbeispiel der vorliegenden Erfindung. Bei der Fotovoltaik-Anlage 230 kann es sich um ein Ausführungsbeispiel der in Fig 2 oder Fig. 4 beschriebenen Fotovoltaik-Anlage 230 handeln. Die Darstellung in Fig. 5 entspricht weitgehend der Darstellung in Fig. 4, mit dem Unterschied, dass der elektrische Speicher vollgeladen ist und überflüssige elektrische Energie über die Kopplungseinrichtung 464 in das öffentliche Stromnetz 468 eingespeist wird.

Fig. 6 zeigt eine schematische Darstellung einer Funktionsweise einer Fotovoltaik-Anlage am Abend gemäß einem Ausführungsbeispiel der vorliegenden Erfindung. Bei der Fotovoltaik-Anlage 230 kann es sich um ein Ausführungsbeispiel der in Fig 2 oder Fig. 4 und Fig. 5 beschriebenen Fotovoltaik-Anlage 230 handeln. Die Darstellung in Fig. 6 entspricht weitgehend der Darstellung in Fig. 5, mit dem Unterschied, dass der elektrische Speicher entladen wird, da die von dem Solarmodul 240 bereitgestellte elektrische Energie nicht zur Versorgung der elektrischen Verbraucher 466 ausreicht. Dies geht soweit, dass die elektrischen Verbraucher 466 ausschließlich über den elektrischen Speicher 242 mit Strom versorgt werden, bis der elektrische Speicher 242 vollständig entladen ist.

Fig. 7 zeigt eine schematische Darstellung einer Funktionsweise einer Fotovoltaik-Anlage in der Nacht gemäß einem Ausführungsbeispiel der vorliegenden Erfindung. Bei der Fotovoltaik-Anlage 230 kann es sich um ein Ausführungsbeispiel der in Fig 2 oder Fig. 4 bis Fig. 6 beschriebenen Fotovoltaik-Anlage 230 handeln. Die Darstellung in Fig. 7 entspricht weitgehend der Darstellung in Fig. 6, mit dem Unterschied, dass der elektrische Speicher vollständig entladen ist und das Solarmodul 240 keinerlei elektrische Energie bereitstellt. Die Versorgung der elektrischen Verbraucher 466 erfolgt ausschließlich über das öffentliche Stromnetz 468.

Am nächsten Morgen wird es zu einem Mischbetrieb zwischen einer Versorgung der elektrischen Verbraucher 466 über das öffentliche Stromnetz 468 und über Strom aus dem Solarmodul 240 kommen, bis die Produktion des Solarmoduls 240 den tatsächlichen Verbrauch der elektrischen Verbraucher 466 erreicht oder übersteigt. Sobald die Produktion von elektrischer Energie des Solarmoduls 240 den tatsächlichen Verbrauch der elektrischen Verbraucher 466 übersteigt, gelangt man zu der in Fig. 4 dargestellten Situation.

In der folgenden Fig. 8 sind beispielhaft die Produktion und der Verbrauch in einem normalen Haushalt dargestellt. Zusätzlich ist hier der Ladezustand mit abgebildet. Für den Anwender, der sich für die Anschaffung einer solchen Anlage interessiert, ist es schwer, die Inhalte dieser Darstellung auf seinen eigenen Bedarf zu übertragen.

Fig. 8 zeigt eine vereinfachte Zeitreihendarstellung zur Darstellung einer Funktionsweise eines Speichersystems gemäß einem Ausführungsbeispiel der vorliegenden Erfindung. Fig. 8 stellt einen Screenshot beziehungsweise ein Bildschirmfoto einer grafischen Anzeige eines Computerprogrammprodukts dar, welches ein Verfahren zum Auslegen einer Fotovoltaik-Anlage in entsprechenden Einrichtungen ausführt. Bei dem Verfahren zum Auslegen einer Fotovoltaik-Anlage kann es sich um das in Fig. 3 beschriebene Verfahren 350 zum Auslegen einer Fotovoltaik-Anlage handeln. Bei der Fotovoltaik-Anlage kann es sich um eine in Fig. 2 oder Fig. 4 bis Fig. 7 beschriebene Fotovoltaik-Anlage 230 handeln. In einem kartesischen Koordinatensystem ist eine Funktionsweise eines Speichersystems 242 in einer Zeitreihendarstellung präsentiert. Auf der Abszisse ist der zeitliche Verlauf in einem Bereich von 10:00 Uhr bis 10:00 Uhr des darauf folgenden Tages dargestellt. Auf der links dargestellten Ordinate ist die elektrische Leistung für den durch die Fotovoltaik-Anlage produzierten Strom und der durch die elektrischen Verbraucher des Haushalts verbrauchte bzw. konsumierte Strom dargestellt sowie auf der rechts dargestellten Ordinate eine Zustandsänderung des Speichersystems in Prozent dargestellt. Insbesondere die Kurve 870 der Zustandsänderung zeigt wieder elektrische Speicher bis ca. 13:00 Uhr geladen wird. Um ca. 18:00 Uhr beginnt der Entladevorgang, bis um ca. 21:00 Uhr der elektrische Speicher vollständig entladen ist und ein weiterer Strombedarf nur über das öffentliche Stromnetz abgedeckt wird. Am nächsten Morgen beginnt um ca. 8:00 Uhr wieder der Ladevorgang für den elektrischen Speicher, um bereits gegen 10:00 Uhr den Speicher vollständig geladen zu haben.

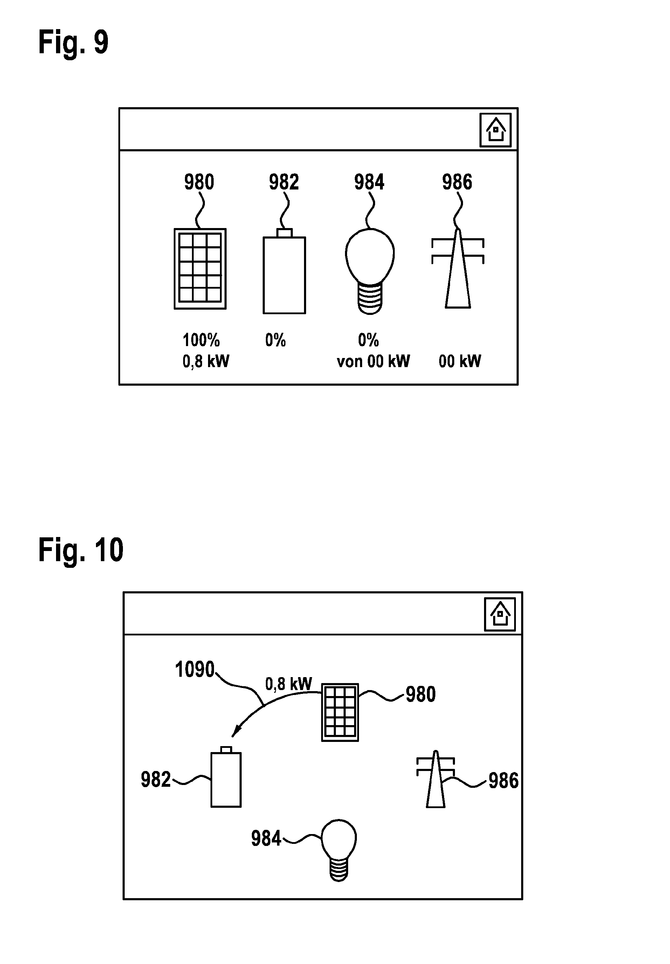

Fig. 9 zeigt eine grafische Darstellung eines aktuellen Betriebszustands gemäß einem Ausführungsbeispiel der vorliegenden Erfindung. Bei der Darstellung in Fig. 9 kann es sich um eine grafische Umsetzung der in Fig. 1 und Fig. 2 beschriebenen Vorrichtung 100 zum Auslegen einer Fotovoltaik-Anlage handeln. In einem Bildschirmfenster repräsentieren vier Symbole 980, 982, 984, 986 eine Produktion von Solarstrom, die in einem elektrischen Speicher gespeicherte elektrische Energie, den Verbrauch der elektrischen Verbraucher sowie den Bezug oder die Einspeisung von Strom in das öffentliche Stromnetz. Das Symbol 980 zeigt eine Solarzelle, das Symbol 982 zeigt eine Batterie, das Symbol 984 zeigt eine Glühlampe und das Symbol 986 zeigt einen Strommast. Die Symbole 980, 982, 984, 986 werden ergänzt durch Ziffern, die physikalische Werte oder Prozentwerte oder beides anzeigen. In dem konkreten Ausführungsbeispiel in Fig. 9 liefert die Solarzelle 980 100 % der möglichen Leistung, was in diesem Fall 0,8 kW entspricht. Der durch das Symbol 982 repräsentierte elektrische Speicher ist zu 0 % geladen. Der durch das Symbol 984 repräsentierte Eigenverbrauch beträgt 0 % und die durch das Symbol 986 repräsentierte Netzaktivität, das heißt, Bezug von Strom aus dem oder Einspeisung von Strom in das öffentliche Stromnetz, beträgt wieder Eigenverbrauch 0 %.

Die Aufgabe besteht darin, einem Anwender Informationen über den Betrieb der Fotovoltaik-Anlage zu geben, bevor eine Installation erfolgt, und ihn so zu einer positiven Kaufentscheidung zu verhelfen. Dieser Idee steht das technische Problem entgegen, dass eine detaillierte Darstellung der Verbraucher im Haushalt eine Messung der Verbräuche benötigt. Analog muss für die detaillierte Darstellung der Solarstromproduktion die mögliche Belegung der Solarmodule auf dem Dach, die Ausrichtung der Anlage zur Sonne und weitere Rahmenwerte angegeben werden. Die Eingabe all dieser Daten ist mit Aufwand verbunden. Ein Aspekt der hier beschriebenen Idee ist es, dieses Problem zu umgehen, indem ein virtuelles Verbrauchs- und Erzeugungsprofil angenommen wird, welches übliche Verbraucher im Haushalt und ein vereinfachtes, jedoch hinreichend genaues Produktionsprofil generiert. Der Anwender kann durch direkte Interaktion die Genauigkeit der Simulation erhöhen. Hierdurch kann der Anwender selber den Realitätsgrad seiner Simulation beeinflussen.

Es wird angenommen, dass das in Fig., 3 beschriebene Verfahren auf einem Smartphone oder einem Tablet-PC als "App" läuft. Dies erlaubt den Zugriff auf die Sensorik der Plattform. Die Simulationen von Produktion und Verbrauch werden wie im Folgenden beschrieben gelöst.

Der Anwender gibt bei der Konfiguration des Programms eine Kategorie der Fotovoltaik-Anlage an. "Klein", "Mittel", "Groß". Da Hausanlagen in der Regel zwischen 5-10 kWh liegen, reicht diese Angabe vollkommen aus. Verfügt die mobile Plattform über einen GPS-Empfänger (bzw. Galileo- bzw. Glonass-Empfänger), wird die aktuelle Position als Hausstandort festgelegt. Alternativ gibt der Anwender die Adresse ein. Die Applikation ermittelt dann die Geoposition mithilfe entsprechender Webdienste. Im weiteren Verlauf entnimmt die Simulation via Internetverbindung die aktuellen Wetterdaten am Standort und kombiniert diese mit einem einfachen astronomischen Modell, um die Sonnenposition am Himmel zu bestimmen. Hieraus kann dann der aktuelle Ertrag simuliert werden.

Der Anwender gibt einige Eckdaten zum Haushalt an, wie beispielsweise Anzahl der Personen im Haushalt, Anzahl der am Tag berufstätigen Personen, Jahresverbrauch und Zahl der Zimmer der Wohneinheit. Anhand dieser Daten wird ein typisches Lastprofil generiert. Dies geschieht dadurch, dass verschiedene typische Verbraucher im Haushalt in einer Datenbank mitsamt ihrer Ein- und Ausschaltwahrscheinlichkeit $p_i(t)$ hinterlegt sind. Des Weiteren ist für jeden Verbrauch auch sein Stromverbrauchsprofil $L_i(t)$ hinterlegt worden.

Bezüglich des Lichts werden Wetterdienstdaten, Uhrzeit und der Sonnenstand herangezogen, um ein realistisches Abbild des Stromverbrauchs zu simulieren. In diesem Fall hängt die Wahrscheinlichkeit nicht nur von der Zeit, sondern auch von dem Wetter und dem Sonnenstand ab $p_i(t,W,S)$. Mit diesem Modell kann nun zu jedem Zeitpunkt ermittelt werden, ob die Verbraucher ein- oder ausgeschaltet sind. Dabei wird mithilfe einer Zufallsvariable w gewürfelt, ob das Gerät eingeschaltet ist.

$$L_{ges}(t) = \sum_i L_i(t)\text{, falls } w \le p_i(t).$$

Der Anwender hat weiterhin die Möglichkeit auf einer Übersichtsseite zu erkennen, welche Geräte gemäß dem Simulator eingeschaltet sind. Diese kann er eigenhändig zu- oder abschalten. Diese Interaktion führt dann dazu, dass die Ein- und Ausschaltwahrscheinlichkeit des Gerätes $p_i(t)$ modifiziert wird. Das heißt, die Simulation lernt das Nutzerverhalten und passt die Simulation diesem Verhalten an.

In Fig. 9 und Fig. 10 sind Darstellungen eines Fotovoltaik-Speichersystems abgebildet. Eine ähnliche Darstellung wäre auch für den Anwender im Rahmen dieser Simulation vorgesehen. Durch eine weitere Interaktionsmöglichkeit kann der Anwender nun den Speicher oder die Fotovoltaik-Anlage hinzufügen oder abschalten. Auf diese Weise erhält der Anwender direktes Feedback darüber, welche Auswirkungen die Verwendung des Fotovoltaik-Speichersystems oder eine Fotovoltaik-Anlage auf seinen momentanen Stromverbrauch hat.

In einer erweiterten Ausführung kann eine Umsetzung der vorgestellten Idee weitere Statistiken darstellen. Eine Übertragung der Daten an einen Server zur weiteren Nutzung wäre möglich. Auf diese Weise könnte die Simulation als tatsächliches Gerät in die Überwachungsprodukte eingebunden werden. Weiterhin besteht die Möglichkeit, Heizungsbedarfs- oder Warmwasserbedarfsmodelle hinzuzufügen und so komplette Haustechnik in einer einfachen Simulation begreifbar zu machen.

Fig. 10 zeigt eine grafische Darstellung aktueller Energieflüsse gemäß einem Ausführungsbeispiel der vorliegenden Erfindung. Bei der Darstellung in Fig. 9 kann es sich um eine grafische Umsetzung der in Fig. 1 und Fig. 2 beschriebenen Vorrichtung 100 zum Auslegen einer Fotovoltaik-Anlage handeln. In einem Bildschirmfenster repräsentieren vier Symbole 980, 982, 984, 986 eine Produktion von Solarstrom, die in einem elektrischen Speicher gespeicherte elektrische Energie, den Verbrauch der elektrischen Verbraucher sowie den Bezug oder die Einspeisung von Strom in das öffentliche Stromnetz. Die Darstellung in Fig. 10 ähnelt der Darstellung in Fig. 9, mit dem Unterschied, dass die Energieflüsse zwischen den vier Komponenten oder Symbolen 980, 982, 984, 986 dargestellt werden. In dem konkreten Ausführungsbeispiel in Fig. 10 liefert die durch das Symbol 980 repräsentierte Solarzelle 0,8 kW an den durch das Symbol 982 repräsentierten elektrischen Speicher. Ferner besteht noch die Möglichkeit der Interaktion, beispielsweise dass der Nutzer einzelne Komponenten "ausschalten" kann und die Simulation dann optional Rückwirkend die Auswirkungen des Wechsels durchrechnet und aktuell mit der geänderten Konfiguration weiterrechnet. Beispielsweise kann der Nutzer den Speicher "wegschaltet", "dann würden die Darstellungen angepasst werden.

Zur Anlagensimulation insbesondere eines Fotovoltaiksystems, als Entscheidungshilfe hinsichtlich eines potenziellen Einbaus einer solchen Anlage, werden als Eingangswerte für die Simulation geografische Daten, meteorologische Daten, grundlegende Gebäude- und Verbrauchsdaten, Bewohneranzahl, in einer Datenbank hinterlegte typische Nutzerprofile sowie Wahrscheinlichkeitswerte für Nutzungsverhalten und Zufallsvariablen einer Gerätenutzung berücksichtigt, wobei eine nutzerseitige Nachkonfiguration der Eingangswerte zur Verbesserung der Simulationsgenauigkeit vorgesehen ist. Die Simulation liefert Statistiken und Vergleiche hinsichtlich Kosten mit oder ohne Fotovoltaiksystem sowie hinsichtlich Funktionen, Verbrauch und Ertrag bei verschiedenen realisierten Varianten. Das vorgestellte Ausführungsbeispiel betrifft die Simulation von Funktions-, Leistungs- und Verbrauchsdaten für Fotovoltaikanlagen und ggf. andere Bereiche der Haustechnik.

Ein Aspekt der vorliegenden Idee ist eine Simulation mit Verzicht auf Istwert-Messdaten ausschließlich unter Verwendung von Modellen, Profilen und dergleichen sowie die Durchführbarkeit durch den Endbenutzer anhand weniger Eingaben. In einer Variante wird die Möglichkeit der Nachjustierung der Simulation, insbesondere auch der von Zufallsvariablen bestimmten Parameter, sowie die Präsentation verschiedener prognostizierter Szenarien beschrieben.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (350) zum Auslegen einer Fotovoltaik-Anlage (230), wobei das Verfahren (350) die folgenden Schritte aufweist:

    Einlesen (352) eines Ortsinformationssignals (104) der Fotovoltaik-Anlage (230), eines Anlageninformationssignals (106) sowie eines Haushaltsinformationssignals (108), wobei das Ortsinformationssignal (104) eine Information über eine geografische Positionierung der Fotovoltaik-Anlage (230) repräsentiert, wobei das Anlageninformationssignal (106) eine Information über eine Art und/oder Größe der Fotovoltaik-Anlage (230) repräsentiert und wobei das Haushaltsinformationssignal (108) eine Information über einen Stromverbrauch eines durch die Fotovoltaik-Anlage (230) zu versorgenden Haushalts (238) und/oder über eine Anzahl der in dem Haushalt (238) lebenden Personen (248) und/oder über eine Zimmeranzahl in dem Haushalt (238) repräsentiert;
    Ermitteln (354) einer Wetterinformation (112) unter Verwendung des Ortsinformationssignals (104) und/oder einer Sonnenpositionsinformation (114) unter Verwendung des Ortsinformationssignals (104) und eines astronomischen Modells;
    Bestimmen (356) eines Fotovoltaik-Ertragsprofils (118) unter Verwendung der Wetterinformation (112), der Sonnenpositionsinformation (114) und/oder des Anlageninformationssignals (106) und Bestimmen eines Verbrauchsprofils (120) des Haushalts (238);
    Determinieren (358) eines Netzstromprofils (124) unter Verwendung des Fotovoltaik-Ertragsprofils (118) und des Verbrauchsprofils (120), wobei das Netzstromprofil (124) eine Information über einen Bedarf einer Strommenge aus einem Stromnetz (244) über die Zeit für den Haushalt (238) bestimmt, um die Fotovoltaik-Anlage (230) auszulegen.

2. Verfahren (350) gemäß Anspruch 1, bei dem im Schritt (352) des Einlesens als Ortsinformationssignal (104) ein Signal (234) eingelesen wird, das ein Signal (234) eines satellitengestützten Positionierungssystems (236) repräsentiert, insbesondere ein GPS-, Glonass- und/oder Galileo-Signal repräsentiert.

3. Verfahren (350) gemäß einem der vorangegangenen Ansprüche, bei dem im Schritt (358) des Determinierens eine Größe eines elektrischen Speichers (242) determiniert wird, um den Bedarf der Strommenge zu reduzieren.

4. Verfahren (350) gemäß einem der vorangegangenen Ansprüche, bei dem im Schritt (352) des Einlesens als Haushaltsinformationssignal (108) ein Signal eingelesen wird, das eine Information über eine Anzahl der in dem Haushalt (238) lebenden Personen (248), die tagsüber arbeiten, repräsentiert.

5. Verfahren (350) gemäß einem der vorangegangenen Ansprüche, mit einem Schritt des Bereitstellens des Netzstromprofils (124).

6. Verfahren (350) gemäß einem der vorangegangenen Ansprüche, mit einem Schritt des Bereitstellens der Größe des elektrischen Speichers (242).

7. Verfahren (350) gemäß einem der Ansprüche 5 bis 6, bei dem im Schritt des Bereitstellens das Netzstromprofil (124) und/oder die Größe des elektrischen Speichers (242) auf einer Anzeigeeinrichtung (232), insbesondere einem Bildschirm, einem Display oder einer optischen Anzeige, für einen Anwender bereitgestellt wird.

8. Verfahren (350) gemäß einem der vorangegangenen Ansprüche, bei dem im Schritt (352) des Einlesens das Anlageninformationssignal (106) und/oder das Haushaltsinformationssignal (108) von einer berührungssensitiven Anzeigeeinheit, insbesondere einem Touch-Display, eingelesen wird.

9. Vorrichtung (100) zum Auslegen einer Fotovoltaik-Anlage (230), wobei die Vorrichtung (100) die folgenden Merkmale aufweist:

eine Schnittstelle (102) zum Einlesen eines Ortsinformationssignals (104) der Fotovoltaik-Anlage (230), eines Anlageninformationssignals (106) sowie eines Haushaltsinformationssignals (108), wobei das Ortsinformationssignal (104) eine Information über eine geografische Positionierung der Fotovoltaik-Anlage (230) repräsentiert, wobei das Anlageninformationssignal (106) eine Information über eine Art und/oder Größe der Fotovoltaik-Anlage (230) repräsentiert und wobei das Haushaltsinformationssignal (108) eine Information über einen Stromverbrauch eines durch die Fotovoltaik-Anlage (230) zu versorgenden Haushalts (238) und/oder über eine Anzahl der in dem Haushalt (238) lebenden Personen (248) und/oder über eine Zimmeranzahl in dem Haushalt (238) repräsentiert;
eine Einrichtung (110) zum Ermitteln einer Wetterinformation (112) unter Verwendung des Ortsinformationssignals (104) und/oder einer Sonnenpositionsinformation (114) unter Verwendung des Ortsinformationssignals (104) und eines astronomischen Modells;
eine Einrichtung (116) zum Bestimmen einer Fotovoltaik-Ertragsprofils (118) unter Verwendung der Wetterinformation (112), der Sonnenpositionsinformation (114) und/oder des Anlageninformationssignals (106) und Bestimmen eines Verbrauchsprofils (120) des Haushalts (238);
eine Einrichtung (122) zum Determinieren eines Netzstromprofils (124) unter Verwendung des Fotovoltaik-Ertragsprofils (118) und des Verbrauchsprofils (120), wobei das Netzstromprofil (124) eine Information über einen Bedarf eine Strommenge aus einem Stromnetz (244) über die Zeit für den Haushalt (238) bestimmt, um die Fotovoltaik-Anlage (230) auszulegen.

10. Computer-Programmprodukt mit Programmcode zur Durchführung der Schritte des Verfahrens (350) nach einem der Ansprüche 1 bis 8, insbesondere wenn das Programmprodukt auf einer Vorrichtung (100) ausgeführt wird.

# Fig. 1

# Fig. 2

## Fig. 3

350

352

354

356

358

## Fig. 4

230

466

240

466

462

460

242

464

468

**Fig. 5**

**Fig. 6**

## Fig. 7

## Fig. 8

# Fig. 9

| 980 | 982 | 984 | 986 |
|---|---|---|---|
| 100% | 0% | 0% | |
| 0,8 kW | | von 00 kW | 00 kW |

# Fig. 10

1090  0,8 kW  980

982

986

984

Europäisches Patentamt
European Patent Office
Office européen des brevets

## EUROPÄISCHER RECHERCHENBERICHT

Nummer der Anmeldung

EP 14 19 7525

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Updated User Manual: "PV PLANNER A DESIGN AND ANALYSIS TOOL FOR SOLAR ELECTRIC SYSTEMS", , 23. November 2011 (2011-11-23), XP055194126, Gefunden im Internet: URL:http://ceep.udel.edu/wp-content/uploads/2013/08/PV-Planner-User-Manual_20112.pdf [gefunden am 2015-06-08] | 1,3,5-7, 9,10 | INV. H02J3/00 H02J3/38 |
| Y | * Seite 7 - Seite 13 * * Seite 18 - Seite 23; Abbildungen 15-17, 20 * * Seite 30 - Seite 33; Abbildungen 30, 31 * ----- | 2 | |
| X | DE 10 2008 003866 A1 (SCHAERFL ALOIS [DE]) 4. Februar 2010 (2010-02-04) * Absatz [0017] - Absatz [0020] * * Absatz [0064] * * Absatz [0154] - Absatz [0161]; Abbildung 1 * ----- | 1,4,8-10 | |
| Y | US 2011/276269 A1 (HUMMEL STEVEN G [US]) 10. November 2011 (2011-11-10) * Absatz [0026] * ----- | 2 | RECHERCHIERTE SACHGEBIETE (IPC) H02J |
| A | US 2005/039787 A1 (BING JAMES M [US]) 24. Februar 2005 (2005-02-24) * Absatz [0003] - Absatz [0004] * * Absatz [0034] * ----- | 1-10 | |

Der vorliegende Recherchenbericht wurde für alle Patentansprüche erstellt

| Recherchenort | Abschlußdatum der Recherche | Prüfer |
|---|---|---|
| München | 10. Juni 2015 | Gatzert, C |

**ANHANG ZUM EUROPÄISCHEN RECHERCHENBERICHT**
**ÜBER DIE EUROPÄISCHE PATENTANMELDUNG NR.**                     EP 14 19 7525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2015

| Im Recherchenbericht angeführtes Patentdokument | Datum der Veröffentlichung | Mitglied(er) der Patentfamilie | Datum der Veröffentlichung |
|---|---|---|---|
| DE 102008003866 A1 | 04-02-2010 | KEINE | |
| US 2011276269 A1 | 10-11-2011 | CA 2798825 A1 | 10-11-2011 |
| | | CA 2798827 A1 | 10-11-2011 |
| | | JP 2013526824 A | 24-06-2013 |
| | | JP 2013529051 A | 11-07-2013 |
| | | US 2011276269 A1 | 10-11-2011 |
| | | US 2011282514 A1 | 17-11-2011 |
| | | WO 2011140553 A1 | 10-11-2011 |
| | | WO 2011140565 A1 | 10-11-2011 |
| US 2005039787 A1 | 24-02-2005 | DE 602004010281 T2 | 02-10-2008 |
| | | EP 1660917 A2 | 31-05-2006 |
| | | ES 2297491 T3 | 01-05-2008 |
| | | US 2005039787 A1 | 24-02-2005 |
| | | US 2010017341 A1 | 21-01-2010 |
| | | US 2013013486 A1 | 10-01-2013 |
| | | WO 2005019870 A2 | 03-03-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007030492 B4